# DEMANDE DE BREVET EUROPEEN

(11) **EP 1 549 011 A1**
(43) Date de publication de la demande: **29.06.2005**
(21) Numéro de dépôt: 03293342.6
(22) Date de dépôt: 26.12.2003
(51) Int. Cl.: H04L 29/06

(54) **Procédé et système de communication entre un terminal et au moins un équipment communicant**

(71) Demandeur: Orange France, 92120 Montrouge (FR)
(72) Inventeur: Annic, Etienne, 78120 Rambouillet (FR); Picquenot, David, 14280 Saint Contest (FR); Thorigne, Yves, 14790 Verson (FR)
(74) Mandataire: Jeune, Pascale

(57) **Abrégé**

Procédé de communication sécurisée de données entre un terminal (20) et au moins un équipement communicant (30, 30').

Selon l'invention, ledit procédé comporte les étapes consistant à : identifier ledit équipement communicant (30, 30') en communication avec ledit terminal (20) par au moins un premier dispositif (25) de sécurité, installé dans ledit terminal, pour reconnaître la nature dudit équipement communicant (30, 30') ; authentifier ledit équipement communicant (30, 30') en acquérant des données traitées par au moins un serveur (10) de sécurité pour être exécutables uniquement par ledit équipement communication (30, 30') ; contrôler l'intégrité dudit équipement communicant (30, 30') par au moins un dispositif (12) d'homologation dudit serveur (10) de sécurité grâce auxdites données transmises lors de l'authentification ; dans le cas d'identification, d'authentification et de contrôle d'intégrité corrects, commander au moins un dispositif (27) de gestion installé dans ledit terminal (20) pour établir une communication sécurisée de données avec ledit équipement communicant (30, 30').

Application à la communication sécurisée de données entre un terminal (20) et un ou plusieurs équipements communicants (30, 30').

## Description

La présente invention concerne un procédé et un système de communication entre un terminal et au moins un équipement communicant.

L'invention s'applique plus particulièrement à la communication sécurisée de données entre un terminal et un ou plusieurs équipements communicants.

Les communications actuellement établies à partir d'un terminal sont destinées à connecter l'utilisateur dudit terminal vers différents réseaux de télécommunications, soit par une communication vocale, par exemple une communication téléphonique, soit par une communication avec un réseau de paquets tel que le réseau Internet, permettant l'accès et la navigation sur différents serveurs dudit réseau.

De manière générale, l'utilisateur actuel d'un terminal peut souhaiter améliorer les possibilités et les caractéristiques techniques de son terminal en ajoutant un équipement supplémentaire connecté audit terminal.

A titre d'exemple, les écrans existants sur un terminal mobile étant de dimension limitée, l'utilisateur peut ajouter un équipement possédant un écran de grande taille, qui est connecté physiquement audit terminal mobile initial. Ainsi, l'utilisateur visualise avec une meilleure ergonomie par exemple des pages en provenance d'un serveur du réseau Internet. De la même façon, l'utilisateur peut ajouter un appareil photo qui se connecte à son terminal, par exemple son PC (Personal Computer), de manière à prendre puis à transmettre au moins une photo par exemple en pièce jointe dans un message électronique émis à partir dudit terminal vers une boîte aux lettres électronique.

Cet équipement ajouté, une fois connecté au terminal, est considéré comme une partie intégrée audit terminal.

Ledit terminal est de toute nature, par exemple un ordinateur personnel ou PC, un terminal mobile ou bien tout autre terminal permettant l'ajout d'un équipement communicant.

Quelque soit la nature de l'équipement ajouté au terminal, ledit équipement est à la disposition de l'utilisateur, en particulier il lui appartient, et est convenablement configuré pour s'adapter à la connexion avec ledit terminal. En général, l'équipement ajouté peut être paramétré de manière à être reconnu par ledit terminal. Pour ce faire, l'équipement ajouté peut être, par exemple, configuré à l'avance en statique de telle façon que la communication avec le terminal, auquel il est connecté, soit chiffrée par une clé de chiffrement prédéfinie. Ledit paramétrage est possible car le terminal et l'équipement ajouté sont à la disposition ou bien appartiennent au même utilisateur, qui configure convenablement son terminal et l'équipement voulant être ajouté audit terminal.

Compte tenu de cette configuration nécessaire pour la communication avec un terminal, seuls les équipements facilement accessibles par l'utilisateur peuvent être ajoutés sans être rejetés par ledit terminal.

Lorsque l'utilisateur d'un terminal souhaite communiquer avec un équipement qui ne lui appartient pas ou qui n'est pas physiquement connecté audit terminal, il ne peut librement disposer de l'équipement. En particulier, le terminal peut être situé à proximité ou non de différents équipements avec lesquels l'utilisateur souhaite communiquer. L'équipement communicant n'a alors pas une configuration adaptée audit terminal, car aucune configuration ne peut être réalisée à cet effet par l'utilisateur du terminal sur l'équipement communicant.

Ledit équipement communicant est par exemple un automate communicant comme un distributeur de boissons, une borne communicante, une caisse communicante, un ordinateur personnel ou PC, etc... ou bien tout terminal incluant des moyens de télécommunications, des moyens de traitement et de mémorisation de données.

Par ailleurs, actuellement dans un terminal mobile, une carte SIM ("Subscriber Identity Module", soit module d'identité abonné) est l'élément permettant d'apporter la sécurité pour les réseaux de téléphonie mobile, tels que le réseau GSM ("Global System for Mobile communications", soit système global pour les communications avec les mobiles) ou bien le réseau GPRS ("General Packet Radio Service", soit service général de radiocommunication en mode paquet). Entre autres fonctions, la carte SIM permet l'authentification de l'abonné sur le réseau mobile, le chiffrement des échanges vocaux ou des échanges de données, ainsi que la personnalisation du terminal mobile. De la même façon, une carte UICC ("UMTS Integrated Circuit Card", soit carte de circuit intégré pour UMTS) est également implantée dans un terminal mobile raccordé à un réseau de type UMTS ("Universal Mobile Télécommunications System, soit système universel de télécommunications avec les mobiles).

De plus, les travaux de standardisation réalisés par l'organisme du 3GPP ("Third Generation Partnership Project") font référence à un terminal dit "éclaté" ("user equipment split") dont le concept est présenté dans le rapport d'étude "3GPP TR22.944 version 5.1.0, report on service requirements for UE functionality split". Mais le 3GPP ne présente ni ne décrit aucune mise en oeuvre et aucune implémentation dudit terminal éclaté.

Le but de l'invention, qui permettrait de remédier aux inconvénients des systèmes existants, est de permettre à un terminal d'établir une communication sécurisée avec au moins un équipement communicant, aussi bien avec un équipement communicant appartenant ou n'appartenant pas à l'utilisateur dudit terminal, et ceci dans le but plus général de développer des services sécurisés à haute valeur ajoutée.

Le résultat technique obtenu, tel qu'implémenté préférentiellement dans au moins un équipement communicant et dans un terminal, vise à offrir des services de communication grâce à un réseau de connexion tel qu'une liaison série par câble, une liaison infrarouge IrDA (Infrared Data Association), un réseau GPRS de télécommunications mobiles, une liaison de communication de proximité sans contact ou NFC (Near Field Contactless) ou bien une liaison sans fil radio Bluetooth (liaison radio courte distance).

Selon l'invention, le but est atteint grâce à un système de communication sécurisée de données entre un terminal et au moins un équipement communicant, caractérisé en ce que, au moins une communication étant établie entre ledit terminal et ledit équipement communicant, ledit système comprend au moins un serveur de sécurité apte à échanger des données, pour sécuriser ladite communication établie, avec au moins un premier dispositif de sécurité dudit terminal, équipé d'au moins un premier dispositif de gestion pour gérer ledit équipement communicant.

L'invention a également pour objet un procédé de communication sécurisée de données entre un terminal et au moins un équipement communicant, remarquable en ce que ledit procédé comporte les étapes suivantes : identifier ledit équipement communicant en communication avec ledit terminal par au moins un premier dispositif de sécurité, installé dans ledit terminal, pour reconnaître la nature dudit équipement communicant ; authentifier ledit équipement communicant en acquérant des données traitées par au moins un serveur de sécurité pour être exécutables uniquement par ledit équipement communicant ; contrôler l'intégrité dudit équipement communicant par au moins un dispositif d'homologation dudit serveur de sécurité grâce auxdites données transmises lors de l'authentification ; dans le cas d'identification, d'authentification et de contrôle d'intégrité positifs, commander au moins un premier dispositif de gestion installé dans ledit terminal pour établir une communication sécurisée de données avec ledit équipement communicant.

Les équipements communicants peuvent être de différente nature, par exemple une borne publique de communication avec un service de messagerie, un distributeur communicant de boissons avec une application de paiement électronique, une borne communicante de péage de parking, un parcmètre communicant, une carte d'identité électronique, un ordinateur personnel de type PC , etc...

Par conséquent, l'équipement E, avec lequel l'utilisateur du terminal souhaite communiquer, ne lui appartient pas et ledit utilisateur ne peut librement en disposer.

Le système de communication sécurisée de données conforme à l'invention permet la composition d'un terminal dit "éclaté" (ou "split terminal") réalisé par la combinaison d'un terminal et d'au moins un équipement communicant. Ledit terminal "éclaté", ainsi formé, permet à l'utilisateur du terminal d'augmenter les possibilités et les caractéristiques techniques de son terminal, avec une sécurité importante, et d'accéder à de nouveaux services auxquels il lui était impossible d'accéder auparavant.

La composition du terminal "éclaté" est réalisée quelque soit la nature dudit équipement communicant, sans avoir à réaliser une configuration pour rendre compatible le terminal et ledit équipement, ce qui évite une perte de temps et des erreurs de configuration dudit terminal par l'utilisateur. La compatibilité et la sécurisation de la communication établie entre le terminal et l'équipement communicant sont réalisées de façon automatique, en étant adaptée à tout équipement communicant proche ou distant.

Un terminal établit une communication avec un équipement communicant. L'identification, l'authentification et le contrôle de l'intégrité dudit équipement communicant sont réalisés par ledit terminal, équipé d'un premier dispositif de sécurité et d'un premier dispositif de gestion, et sont validés par un serveur de sécurité, qui dialogue avec ledit terminal.

Toutes les entités du système de communication sécurisée sont équipées de moyens d'émission et de réception de données permettant les échanges de données entre lesdites entités.

Selon l'invention, ledit procédé inclut une étape d'établissement d'une liaison par l'intermédiaire d'au moins un réseau de connexion entre ledit terminal et ledit équipement communicant.

Selon l'invention, ladite liaison établie par l'intermédiaire dudit réseau de connexion permet des communications appartenant au groupe constitué des communications filaire, mobile, optique et radiocommunication de proximité.

Avant tout, le terminal établit une communication avec un équipement communicant de manière à accéder au service souhaité, la combinaison dudit terminal et de l'équipement communicant composant le terminal "éclaté".

La composition dudit terminal "éclaté" est liée à l'établissement d'une liaison entre ledit terminal et ledit équipement communicant.

Le terminal et l'équipement communicant (borne, parcmètre, PC, ...) entre en communication grâce à un réseau de connexion. Le réseau de connexion peut être, par exemple, une liaison série par câble, un réseau GPRS de télécommunications mobiles, une liaison infrarouge IrDA (Infrared Data Association), une liaison de communication de proximité sans contact ou NFC (Near Field Contactless) ou bien une liaison sans fil radio Bluetooth (liaison radio courte distance).

Conformément à l'invention, les échanges de données entre ledit terminal et ledit équipement communicant sont gérés et contrôlés par l'intermédiaire d'au moins un premier et d'au moins un deuxième dispositifs de sécurité, respectivement installés dans ledit terminal et ledit équipement communicant.

Le terminal établit une communication avec au moins un équipement communicant pour composer un terminal dit "éclaté", réalisé par la combinaison du terminal et dudit équipement communicant.

Le système de communication sécurisée permet des échanges de messages entre le terminal et l'équipement communicant avec une sécurité importante. Lesdits premier dispositif de sécurité et de gestion du terminal, ainsi que le serveur de sécurité, réalisent et valident l'identification, l'authentification et un contrôle de l'intégrité quelque soit ledit équipement communicant. L'équipement communicant est équipé d'un deuxième dispositif de sécurité qui gère les échanges avec ledit terminal composant le terminal "éclaté".

Selon l'invention, au moins une procédure d'activation d'une communication sécurisée est identifiée et traitée par ledit premier dispositif de sécurité entre ledit terminal et ledit équipement communicant.

Dès que le terminal établit une communication avec ledit équipement communicant, la gestion dudit équipement communicant est traitée pour composer un terminal "éclaté".

Une procédure d'activation d'un terminal "éclaté" est mise en oeuvre pour établir une communication sécurisée entre le terminal et ledit équipement communicant. De manière à reconnaître la procédure mise en oeuvre, un identifiant est affecté à la gestion de la communication sécurisée correspondant audit équipement communicant, avec lequel la communication est établie.

Conformément à l'invention, au moins un paramétrage de ladite communication sécurisée est contrôlé par ledit premier dispositif de sécurité dudit terminal automatiquement, sans intervention d'un utilisateur dudit terminal.

Pour augmenter la sécurité, par exemple, les messages restés sans réponse après une durée supérieure à la valeur d'une temporisation, paramétrée dans ledit premier dispositif de sécurité dudit terminal, provoque automatiquement l'abandon de la procédure d'activation du terminal "éclaté". Est également paramétrable le nombre maximum d'abandons autorisés pour une procédure d'activation correspondant au même terminal "éclaté", de façon à éviter toute malversation extérieure.

Selon l'invention, le résultat du déchiffrement des données traitées par ledit serveur de sécurité et exécutées par ledit équipement communicant est identique au résultat du chiffrement de l'identité dudit équipement dans ledit serveur de sécurité.

Conformément à l'invention, le déchiffrement desdites données, traitées par ledit serveur de sécurité et exécutées par ledit équipement communicant, dépend du contrôle d'intégrité, réalisé par ledit dispositif d'homologation installé dans ledit serveur de sécurité, en fonction de la configuration à un moment donné dudit équipement communicant pour éviter toute possibilité de prévision du résultat.

Pour obtenir une sécurité importante dans la communication établie entre le terminal et l'équipement communicant et dans la gestion du terminal "éclaté", la gestion de ladite sécurité est partagée entre le terminal, ledit équipement communicant et ledit un serveur de sécurité. Si l'une des trois entités détecte une anomalie, la procédure d'activation du terminal "éclaté" est abandonnée.

Pour éviter toute fraude, intervention ou malversation extérieure, un traitement est réalisé par ledit dispositif d'homologation du serveur de sécurité sur les données échangées entre les entités du système de communication sécurisée pour contrôler l'intégrité du terminal et de l'équipement communicant.

Pour ce faire, une comparaison est effectuée entre le résultat du déchiffrement des données traitées par ledit serveur de sécurité et le résultat du chiffrement de l'identité dudit équipement communicant.

Pour augmenter la sécurité, ledit dispositif d'homologation du serveur de sécurité sélectionne parmi un ensemble de couples de clés de chiffrement disponibles dans au moins une table de correspondance, en fonction de la configuration à un moment donné dudit équipement communicant.

Selon l'invention, lesdits deuxième dispositif de sécurité et deuxième dispositif de gestion dudit équipement communicant interdisent toute intervention sur ledit équipement communicant par ledit utilisateur dudit terminal mobile.

De cette façon, l'établissement du terminal "éclaté" est sécurisé. L'utilisateur dudit terminal ne peut intervenir sur ledit équipement communicant d'aucune façon, ni aucune autre intervention extérieure, pour empêcher toute fraude ou malversation.

Conformément à l'invention, les échanges de données entre ledit terminal et ledit équipement communicant sont sécurisés par l'utilisation d'au moins une clé de chiffrement pour traiter les données avant la transmission.

Conformément à l'invention, les échanges de données entre ledit terminal et ledit serveur de sécurité sont sécurisés par l'utilisation d'au moins une clé de chiffrement pour traiter les données avant la transmission.

Contrairement aux systèmes existants, le chiffrement est réalisé dans le terminal et dans le serveur de sécurité. De plus, la transmission des données peut également être chiffrée lors des échanges de messages entre les différentes entités du système de communication sécurisée.

Selon l'invention, plusieurs équipements communicants établissent simultanément une communication avec ledit terminal par l'intermédiaire d'au moins un réseau de connexion.

Selon l'invention, plusieurs équipements communicants communiquent indépendamment avec ledit terminal par l'intermédiaire dudit réseau de connexion.

Selon l'invention, une procédure d'activation de ladite communication sécurisée est identifiée pour chaque équipement communicant en communication avec ledit terminal.

Plusieurs équipements communicants peuvent entrer en communication simultanément et de manière indépendante avec ledit terminal selon les applications souhaitées par l'utilisateur, par exemple un distributeur de boissons, une borne communicante, un PC, etc... , et reliés audit terminal par au moins un réseau de connexion. La communication entre ledit terminal et au moins un équipement communicant est établie par l'intermédiaire dudit réseau de connexion.

Le système de communication sécurisée de données, conforme à l'invention et permettant la composition d'un terminal dit "éclaté" réalisé par la combinaison d'un terminal et d'au moins un équipement communicant, est transposable à tous types de réseau de connexion et à tous équipements communicants possédant les fonctions et les moyens de communication aptes à la composition d'un terminal "éclaté".

Une procédure d'activation d'un terminal "éclaté" est mise en oeuvre pour chacun desdits équipements communicants, en toute sécurité et de façon indépendante. Un identifiant différent permet de différencier tous les messages, de manière à identifier les différentes procédures d'activation desdits terminaux "éclatés" simultanés.

La description qui va suivre en regard des dessins annexés, donnés à titre d'exemple non limitatif, fera bien comprendre en quoi consiste l'invention et comment elle peut être réalisée.

La figure 1 représente l'architecture générale d'un système de communication sécurisée entre un terminal et au moins un équipement communicant, conforme à l'invention.

La figure 2 est une représentation des étapes du procédé de communication sécurisée entre un terminal et au moins un équipement communicant, conforme à l'invention.

Le système de communication sécurisée de données conforme à l'invention permet la composition d'un terminal dit "éclaté" (ou "split terminal") réalisé par la combinaison d'un terminal 20 et d'au moins un équipement E communicant 30, 30'. Ledit terminal éclaté est une solution technique de mise en oeuvre du concept présenté dans le rapport technique du 3GPP.

Ledit terminal éclaté, ainsi formé, permet à l'utilisateur du terminal 20 d'augmenter les possibilités et les caractéristiques techniques de son terminal en toute sécurité, quelque soit ledit équipement E communicant 30, 30'.

La composition dudit terminal "éclaté" est liée à l'établissement d'une liaison entre ledit terminal 20 et ledit équipement E communicant 30, 30'. Ledit équipement communicant 30, 30' est en liaison avec le terminal par l'intermédiaire d'au moins un réseau 50 de connexion.

Ledit réseau 50 de connexion permet des communications appartenant au groupe constitué des communications filaire, radio, optique et radiocommunication de proximité, tel qu'une liaison série par câble, un réseau GPRS de télécommunications mobiles, une liaison infrarouge IrDA (Infrared Data Association), une liaison de communication de proximité sans contact ou NFC (Near Field Contactless) ou bien une liaison sans fil radio Bluetooth (liaison radio courte distance).

Ledit terminal 20 est de toute nature, par exemple un ordinateur personnel ou PC, un terminal mobile ou bien tout autre terminal permettant l'ajout d'un équipement E communicant 30, 30'.

Les équipements E communicants 30, 30' peuvent être de différente nature, par exemple une borne publique de communication avec un service de messagerie, un distributeur communicant de boissons avec une application de paiement électronique, une borne communicante de péage de parking, un parcmètre communicant, un ordinateur personnel de type PC , etc...

Par conséquent, l'équipement E, avec lequel l'utilisateur du terminal souhaite communiquer, peut ne pas lui appartenir et donc l'utilisateur ne peut librement en disposer.

La composition du terminal "éclaté" est réalisée quelque soit la nature dudit équipement communicant, sans avoir à réaliser une configuration pour rendre compatible le terminal et ledit équipement, ce qui évite une perte de temps et des erreurs de configuration dudit terminal par l'utilisateur. La compatibilité et la sécurisation de la communication établie entre le terminal et l'équipement communicant sont réalisées de façon automatique, en étant adaptée à tout équipement communicant proche ou distant.

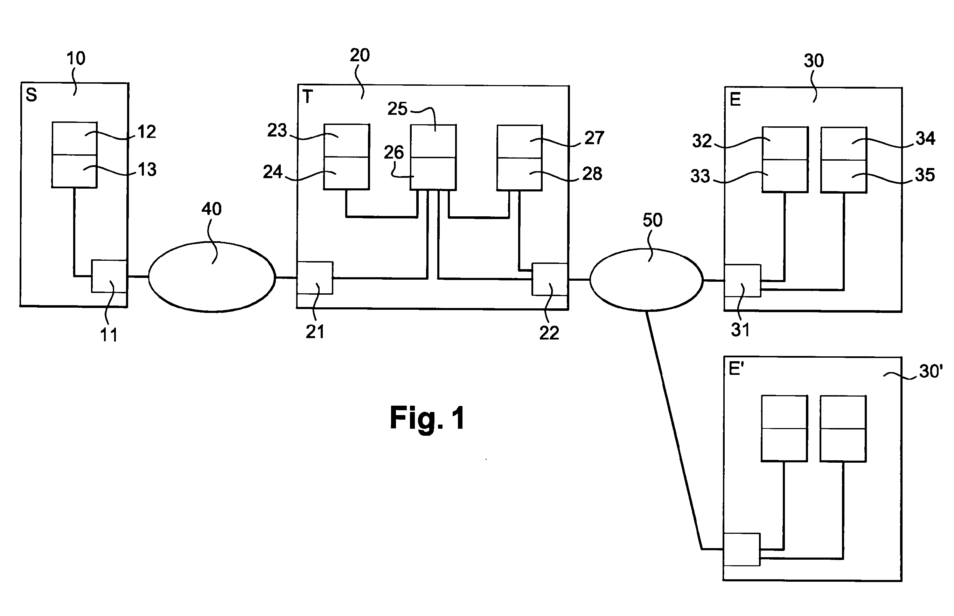

Sur la figure 1 qui représente un système mettant en oeuvre l'invention, les équipements concernés sont au moins un serveur 10 de sécurité "appelé S", au moins un terminal 20 "appelé T" et au moins un équipement communicant 30, 30' "appelé E".

Ledit serveur 10 de sécurité comprend au moins un dispositif 12 d'homologation pour réaliser le contrôle et la validation de l'identification, de l'authentification et du contrôle d'intégrité d'au moins un équipement E communicant 30, 30', lorsque ledit équipement E communicant 30, 30' est combiné avec un terminal 20 pour composer un terminal dit "éclaté". Ledit dispositif 12 d'homologation est équipé d'une interface 13 de communication, constituée au moins de moyens d'émission et de réception de données, apte à émettre et à recevoir des messages avec une première interface 11 de transmission dudit serveur 10 de sécurité. Ladite première interface 11 de transmission, constituée au moins de moyens d'émission et de réception de données, permet les échanges de données transmises avec ledit terminal 20, équipé d'une deuxième interface 21 de transmission. Ledit serveur 10 de sécurité est apte à commander et échanger des données avec ledit premier dispositif 25 de sécurité dudit terminal 20, pour établir une communication sécurisée de données avec ledit équipement E communicant 30, 30'. La transmission entre ledit serveur 10 de sécurité et le terminal 20 est établie par l'intermédiaire d'au moins un réseau 40 d'accès.

Ledit réseau 40 d'accès permet des communications appartenant au groupe constitué des communications filaire, mobile, optique et radiocommunication de proximité, tel qu'une liaison série par câble, une liaison infrarouge IrDA (Infrared Data Association), un réseau GPRS de télécommunications mobiles, une liaison de communication de proximité sans contact ou NFC (Near Field Contactless) ou bien une liaison sans fil radio Bluetooth (liaison radio courte distance).

Ledit terminal 20 comprend au moins une interface utilisateur 23, au moins un premier dispositif 25 de sécurité et au moins un premier dispositif 27 de gestion pour gérer ledit équipement E communicant 30, 30'.

L'interface utilisateur 23 permet à l'utilisateur d'accéder aux ressources du terminal 20, tel qu'un moyen d'affichage comme un écran ou bien un moyen de restitution sonore ou vocale, tel qu'un moyen d'entrée de données comme un clavier ou tel qu'un moyen de stockage de données comme une mémoire dudit terminal 20. L'interface utilisateur 23 restitue les messages transmis pour informer l'utilisateur dudit terminal 20 et permet la validation et l'acceptation par ledit utilisateur de l'établissement de ladite communication selon la nature dudit équipement E communicant 30, 30', ainsi que celles de la procédure d'activation d'un terminal "éclaté". Ladite interface utilisateur 23 est équipée d'une interface 24 de communication, constituée au moins de moyens d'émission et de réception de données, apte à émettre et à recevoir des messages avec une interface 26 de communication du premier dispositif 25 de sécurité dudit terminal 20.

Le premier dispositif 25 de sécurité du terminal 20 est chargé des fonctions d'identification, d'authentification et de contrôle d'intégrité lors de l'établissement d'une communication avec au moins un équipement E communicant 30, 30', lorsque ledit équipement E communicant 30, 30' est combiné avec le terminal 20 pour composer un terminal dit "éclaté". Le premier dispositif 25 de sécurité reçoit l'identité dudit équipement communicant 30, 30'. Il est apte à reconnaître la nature dudit équipement E communicant 30, 30' et apte à dialoguer avec ledit serveur 10 de sécurité pour sécuriser ladite communication établie entre le terminal 20 et l'équipement E communicant 30, 30'. Ledit premier dispositif 25 de sécurité est également équipé d'une interface 26 de communication, constituée au moins de moyens d'émission et de réception de données, qui est apte à émettre et à recevoir des messages avec une interface 28 de communication du premier dispositif 27 de gestion dudit terminal 20.

Le premier dispositif 27 de gestion dudit terminal 20 est chargé de la gestion du terminal "éclaté", composé par la combinaison du terminal 20 avec au moins un équipement E communicant 30, 30'. Le premier dispositif 27 de gestion est équipé d'une interface 28 de communication, constituée au moins de moyens d'émission et de réception de données, apte à émettre et à recevoir des messages avec ladite interface 26 de communication du premier dispositif 25 de sécurité dudit terminal 20 et apte à émettre et à recevoir des messages avec ladite troisième interface 22 de transmission compatible avec ledit réseau 50 de connexion.

Ladite interface 26 de communication du premier dispositif 25 de sécurité dudit terminal 20 est apte à émettre et à recevoir des messages avec les deuxième 21 et troisième 22 interfaces de transmission, en plus des échanges de données avec lesdites interfaces de communication 24 et 28 dudit terminal 20. Ladite deuxième interface 21 de transmission dudit terminal 20, constituée au moins de moyens d'émission et de réception de données, permet les échanges de données transmises avec ledit serveur 10 de sécurité, équipé de ladite première interface 11 de transmission. La transmission entre ledit serveur 10 de sécurité et le terminal 20 est établie par l'intermédiaire dudit réseau 40 d'accès. Ladite troisième interface 22 de transmission dudit terminal 20, constituée au moins de moyens d'émission et de réception de données, permet les échanges de données transmises avec au moins un équipement E communicant 30, 30', équipé d'une quatrième interface 31 de transmission. La transmission entre ledit terminal 20 et ledit équipement E communicant 30, 30' est établie par l'intermédiaire d'au moins un réseau 50 de connexion.

Lesdites troisième 22 et quatrième 31 interfaces de transmission du terminal 20 et dudit équipement E communicant 30, 30' sont compatibles avec ledit réseau 50 de connexion.

Si différents équipements E communicants 30, 30' sont raccordés à différents types de réseau 50 de connexion, chaque équipement E communicant 30, 30' est équipé avec une interface 31 de transmission compatible avec le type du réseau 50 de connexion correspondant. Une communication peut alors être établie avec un terminal 20 équipé d'une troisième interface 22 de transmission compatible avec le type du réseau 50 de connexion sur lequel lesdits équipements E communicants 30, 30' sont raccordés. Plusieurs équipements E communicants peuvent établir simultanément et de façon indépendante une communication avec ledit terminal par l'intermédiaire d'au moins un réseau 50 de connexion.

Le terminal 20 pourra être équipé de différentes interfaces 22 de transmission correspondant aux différents types de réseau 50 de connexion.

Ledit équipement E communicant 30, 30' comprend au moins un deuxième dispositif 32 de sécurité pour réaliser l'identification, l'authentification et le contrôle d'intégrité lors de l'établissement d'une communication avec un terminal 20 et au moins un deuxième dispositif 34 de gestion pour gérer ledit terminal 20. Ledit deuxième dispositif 32 de sécurité de l'équipement E communicant 30, 30' est équipé d'une interface 33 de transmission, constituée au moins de moyens d'émission et de réception de données, apte à émettre et à recevoir des messages avec ladite quatrième interface 31 de transmission compatible avec ledit réseau 50 de connexion.

Ledit deuxième dispositif 34 de gestion de l'équipement E communicant 30, 30' est chargé de la gestion du terminal dit "éclaté", composé par la combinaison du terminal 20 avec ledit équipement E communicant 30, 30'. Le deuxième dispositif 34 de gestion est équipé d'une interface 35 de communication, constituée au moins de moyens d'émission et de réception de données, apte à émettre et à recevoir des messages avec ladite interface 33 de communication dudit deuxième dispositif 32 de sécurité dudit équipement E communicant 30, 30' et apte à émettre et à recevoir des messages avec ladite quatrième interface 31 de transmission compatible avec ledit réseau 50 de connexion.

Lesdits deuxième dispositif 32 de sécurité et deuxième dispositif 34 de gestion dudit équipement communicant 30, 30' interdisent toute intervention sur ledit équipement communicant 30, 30' par un utilisateur dudit terminal mobile 20. De cette façon, l'établissement dudit terminal "éclaté" est sécurisé. De cette façon, l'utilisateur dudit terminal 20 ne peut intervenir sur ledit équipement communicant 30, 30' d'aucune façon, ni aucune autre intervention extérieure, de manière à empêcher toute fraude ou malversation ou tout accès au paramétrage.

Plusieurs équipements E communicants 30, 30' peuvent entrer en communication simultanément et de manière indépendante avec ledit terminal 20 selon les applications souhaitées par l'utilisateur, par exemple un distributeur de boissons, une borne communicante, un PC, etc... , et reliés audit terminal 20 par au moins un réseau 50 de connexion. La communication entre ledit terminal 20 et au moins un équipement E communicant 30, 30' est établie par l'intermédiaire dudit réseau 50 de connexion. Une procédure d'activation de la communication sécurisée est identifiée pour chaque équipement communicant 30, 30' en communication avec ledit terminal 20.

L'équipement E communicant 30, 30' n'est pas toujours situé à proximité physique du terminal 20. Ledit équipement E communicant 30, 30' peut être, par exemple, un serveur applicatif dans un réseau de données, en particulier le réseau Internet ou bien un réseau privé d'entreprise. Dans ce cas, ledit équipement E communicant 30, 30' est en liaison avec ledit terminal 20 par un réseau 50 de connexion, qui peut être par exemple un réseau mobile de télécommunications de type réseau GPRS (General Packet Radio Service, soit service général de radiocommunication en mode paquet) ou bien le réseau Internet.

De façon générale, le système de communication sécurisée de données conforme à l'invention et permettant la composition d'un terminal dit "éclaté" réalisé par la combinaison d'un terminal 20 et d'au moins un équipement E communicant 30, 30', est transposable à tous types de réseau 50 de connexion, qu'il soit mobile (par exemple le réseau mobile UMTS), qu'il soit fixe (par exemple un réseau ADSL), qu'il soit filaire (par exemple une liaison série), qu'il soit sans contact (par exemple un accès NFC, radiocommunication de proximité), qu'il soit optique (par exemple, une liaison infrarouge IrDA ), etc...

Il est également transposable à tous équipements E communicant 30, 30' que ce soit une montre communicante ou un accessoire vestimentaire communicant, un capteur sur une machine communicante, un outil médical ou un outil de mesure communicant, etc... , ou tout équipement E possédant les fonctions et les moyens de communication aptes à la composition d'un terminal "éclaté".

La composition dudit terminal "éclaté" est liée à l'établissement d'une liaison par l'intermédiaire dudit réseau 50 de connexion entre ledit terminal 20 et au moins un équipement E communicant 30, 30'.

L'établissement d'une communication entre le terminal 20 et un équipement E communicant 30, 30' peut être activée soit à l'initiative de l'utilisateur du terminal 20, soit par la reconnaissance de la présence d'un équipement E communicant 30, 30' à proximité dudit terminal 20.

Dans le premier cas, l'utilisateur commande son terminal 20 de manière à établir une liaison par l'intermédiaire du réseau 50 de connexion existant, par exemple, l'utilisateur place son terminal 20 devant un capteur NFC pour un réseau d'accès sans contact. Il lance ensuite une procédure d'activation pour un terminal dit "éclaté", réalisé par la combinaison dudit terminal 20 et d'au moins un équipement E communicant 30, 30'.

Dans le second cas, ladite troisième interface 22 de transmission du terminal 20 détecte la présence de ladite quatrième interface 31 de transmission d'au moins un équipement E communicant 30, 30'. Par exemple, à la détection de ladite troisième interface 22 de transmission, la quatrième interface 31 de transmission de l'équipement E communicant 30, 30' peut émettre un message d'interruption à destination du système d'exploitation du terminal 20. Ledit système d'exploitation, en place sur le terminal 20 qui reçoit ledit message d'interruption, lance la procédure d'activation du terminal "éclaté".

Une procédure d'activation d'un terminal "éclaté" est mise en oeuvre pour établir une communication sécurisée entre le terminal et ledit équipement communicant. Une procédure d'activation de la communication sécurisée est identifiée et traitée par ledit premier dispositif 25 de sécurité entre le terminal 20 et ledit équipement E communicant 30, 30'. De manière à reconnaître la procédure mise en oeuvre, un identifiant est affecté à la gestion de la communication sécurisée correspondant audit équipement E communicant 30, 30', avec lequel la communication est établie.

Afin d'augmenter la sécurité de la communication entre le terminal 20 et ledit équipement E communicant 30, 30', combinaison appelée "terminal éclaté", la gestion de ladite sécurité est partagée entre le terminal 20, ledit équipement E communicant 30, 30' et au moins un serveur 10 de sécurité. Si l'une des trois entités détecte une anomalie, la procédure d'activation du terminal "éclaté" est abandonnée.

Par ailleurs, dès le début de la procédure d'activation du terminal "éclaté", une temporisation est commandée après l'envoi de chaque message. La durée de ladite temporisation est paramétrable ou prédéfinie. Lorsque la durée de la temporisation dépasse la valeur paramétrée ou prédéfinie, la procédure d'activation en cours est abandonnée. Tous les messages, avec un identifiant correspondant à ladite procédure d'activation abandonnée, ne sont plus pris en compte. Les messages, restés sans réponse après une durée supérieure à la valeur de la temporisation paramétrée ou prédéfinie, provoquent également l'abandon de la procédure d'activation du terminal "éclaté". Est également paramétrable le nombre d'abandons maximum autorisés pour une procédure d'activation correspondant au même terminal "éclaté", soit la combinaison d'un même terminal 20 et d'un même équipement E communicant 30, 30'. Une fois que le nombre paramétré d'abandons pour anomalie est atteint, l'activation dudit "terminal éclaté" correspondant devient alors impossible.

Tout paramétrage, permettant ladite communication sécurisée, est ainsi contrôlé par le premier dispositif 25 de sécurité du terminal 20 automatiquement, sans intervention de l'utilisateur dudit terminal 20.

Dans tous les cas d'échec, ledit terminal 20 reçoit un message d'arrêt de l'établissement de ladite communication sécurisée par ladite interface utilisateur 23.

Par conséquent, cette gestion partagée permet un niveau élevé de sécurité et empêche la création frauduleuse ou intempestive d'un "terminal éclaté". De plus, le dispositif 12 d'homologation du serveur 10 de sécurité, le deuxième dispositif 32 de sécurité de l'équipement E communicant 30, 30', ainsi que le premier dispositif 25 de sécurité du terminal 20 peuvent être réalisés, par exemple, par une carte à puce ou bien par un composant électronique sécurisé, possédant les fonctions décrites ci-dessous dans le procédé d'activation du terminal "éclaté". Cette carte à puce peut être par exemple une carte SIM ou une carte UICC, telle que définie par les standards du Groupe de Normalisation 3GPP (Third Generation Partnership Project) et de l'ETSI (European Telecommunications Standards Institute, soit institut européen de normalisation des télécommunications).

Par ailleurs, pour sécuriser les communications entre les différentes entités du système conforme à l'invention et pour authentifier lesdites entités entre elles, les messages transmis sont chiffrés, par exemple, en utilisant un procédé de chiffrement existant, soit un chiffrement par clé publique/clé privée ou soit un chiffrement par clé symétrique. Conformément au procédé de chiffrement, lorsqu'une entité dudit système de communication sécurisée chiffre un message M par une clé K, le message K(M) ne peut être lu que par l'entité possédant la clé complémentaire K'. Avec le chiffrement par clé publique/clé privée, à une clé K correspond une clé complémentaire K' de telle manière que, le message M chiffré par la clé K étant un message K(M), le chiffrement du message K(M) par la clé complémentaire K' est égal au message M. Dans le cas d'un chiffrement par clé symétrique, les clés K et K' sont identiques.

Les échanges de données entre ledit terminal 20 et, d'une part, ledit équipement E communicant 30, 30' et, d'autre part, ledit serveur 10 de sécurité sont sécurisés de manière à traiter les données avant la transmission. Les transmissions entre le premier dispositif 25 de sécurité du terminal 20 et, d'une part, le deuxième dispositif 32 de sécurité dudit équipement E communicant 30, 30' et, d'autre part, le dispositif 12 d'homologation dudit serveur 10 de sécurité sont également chiffrées.

Les échanges de données entre ledit terminal 20 et ledit équipement E communicant 30, 30' sont gérés et contrôlés par l'intermédiaire d'au moins un premier 25 et au moins un deuxième 32 dispositifs de sécurité, respectivement installés dans ledit terminal 20 et ledit équipement E communicants 30, 30'.

Le système de communication sécurisée, conforme à l'invention, prévoit que le dispositif 12 d'homologation du serveur 10 de sécurité possède les clés appelées KA', KB, KC, KD' et les clés temporaires KTA et KTA'. Le premier dispositif 25 de sécurité du terminal 20 possède les clés appelées KB' et KD et les clés temporaires KTB et KTB'. Le deuxième dispositif 32 de sécurité de l'équipement E communicant 30, 30' possède les clés KC' et KA et les clés temporaires KTC et KTC'. Les clés temporaires sont utilisées pour chiffrer et authentifier les communications à l'issue positive de la procédure d'activation dudit terminal "éclaté". Les clés temporaires KTA, KTA', KTB, KTB', KTC, KTC' sont de préférence des clés symétriques permettant d'offrir une performance plus importante de chiffrement. Les autres clés KA, KA', KB, KB', KC, KC', KD et KD' sont de préférence des clés asymétriques suivant le principe de clé publique/clé privée.

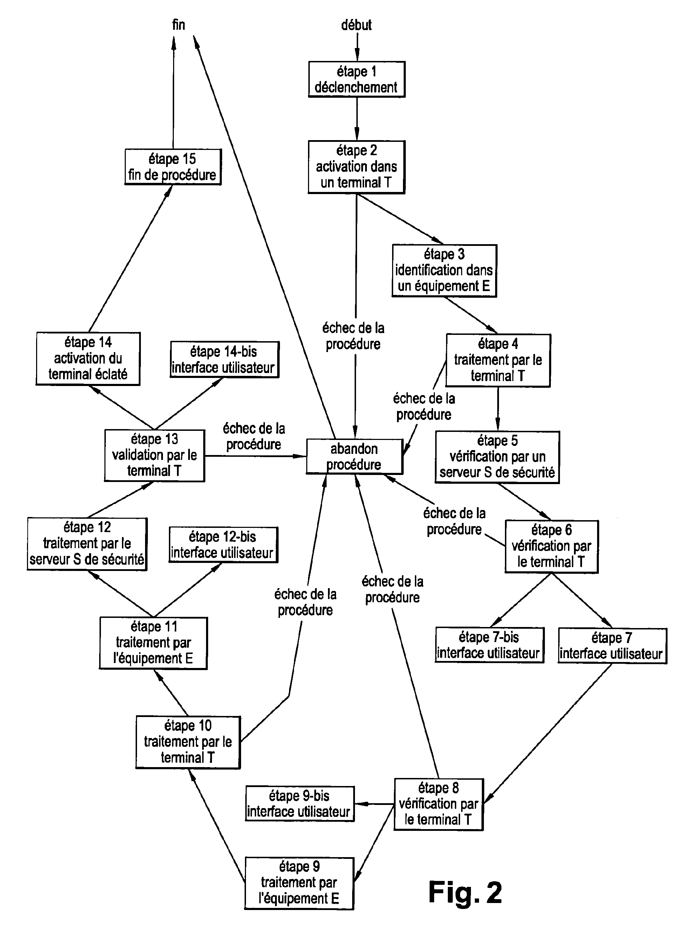

Pour aider à comprendre l'invention, les différentes étapes du procédé de communication sécurisée entre un terminal 20 et au moins un équipement E communicant 30, 30' sont représentées en figure 2.

Comme mentionné précédemment, le déclenchement de la procédure d'activation du terminal "éclaté" est provoqué soit par le terminal 20 soit par au moins un équipement E communicant 30, 30' (étape 1).

Dans le cas d'un déclenchement du côté du terminal 20, l'utilisateur peut commander la procédure d'activation d'un terminal "éclaté", en la sélectionnant sur l'interface utilisateur 23 du terminal 20 sous la forme, par exemple, d'un lien hypertexte dans une page web visualisée sur un écran. L'interface utilisateur 23 commande alors le premier dispositif 25 de sécurité du terminal 20 pour une procédure d'activation d'un terminal "éclaté", via les interfaces de communication 24 et 26. Sinon, l'équipement E communicant 30, 30' peut déclencher ladite procédure d'activation.

Dans les deux cas, le premier dispositif 25 de sécurité du terminal 20 génère un identifiant correspondant à ladite procédure d'activation en cours. Comme mentionné précédemment, plusieurs équipements E communicants 30, 30' peuvent établir une communication avec ledit terminal 20. Par conséquent, chaque demande d'activation d'un terminal éclaté, réalisé avec un équipement E communicant 30, 30' différent, est identifiée par un identifiant dans le premier dispositif 25 de sécurité.

Ledit premier dispositif 25 de sécurité du terminal 20 demande l'identification dudit équipement E communicant 30, 30'. Ledit premier dispositif 25 de sécurité émet un message d'interrogation d'identification vers le deuxième dispositif 32 de sécurité de l'équipement E communicant 30, 30', via l'interface 26 de communication et la troisième interface 22 de transmission du terminal 20, via le réseau 50 de connexion, via la quatrième interface 31 de transmission et l'interface 33 de transmission de l'équipement E communicant 30, 30'. Ledit message d'interrogation d'identification contient l'identifiant de la procédure d'activation en cours et le type de message soit "demande identification" (étape 2).

Si, par exemple, le réseau 50 de connexion est un réseau de communication par liaison infrarouge, le terminal 20 et l'équipement E communicant 30, 30' doivent être chacun équipé avec une interface 22, 31 de transmission de type liaison infrarouge IrDA. Lorsque la liaison infrarouge est établie entre le terminal 20 et au moins un équipement E communicant 30, 30', la troisième interface 22 de transmission du terminal 20 envoie un message via l'interface 26 de communication vers le premier dispositif 25 de sécurité pour demander l'identification dudit équipement E communicant 30, 30'. Quelque soit le déclenchement, le message transmis contient une demande d'identification de l'équipement E communicant 30, 30'.

Les échanges de messages dans le terminal 20 peuvent être réalisés, par exemple, par un protocole conforme au protocole appelé SIMAccess, tel que décrit dans la demande française de brevet FR 02 15521 déposée le 9 décembre 2002. Les échanges de données sur le réseau 50 de connexion et dans l'équipement E communicant 30, 30' peuvent être réalisés, par exemple, par le protocole existant SOAP (Simple Object Access Protocol, soit protocole de communication entre objets) défini par l'organisme de standardisation W3C (World Wide Web Consortium). Pour augmenter la sécurité, les communications transmises sur le réseau 50 de connexion peuvent également être chiffrées. Tel que décrit précédemment, la procédure d'activation en cours peut être abandonnée à tout moment si un échange a échoué.

Après réception du message de "demande identification", le deuxième dispositif 32 de sécurité de l'équipement E communicant 30, 30' transmet au premier dispositif 25 de sécurité du terminal 20 un message de réponse à la demande d'identité contenant l'identifiant correspondant à la procédure d'activation en cours, le type de message soit "réponse à demande d'identité" et l'identité chiffrée IC qui est le produit du chiffrement par la clé KA de l'identité IE de l'équipement E communicant 30, 30' et dudit identifiant correspondant à la procédure d'activation en cours (étape 3).

La clé KA est utilisée pour chiffrer l'identité IE de l'équipement E communicant 30, 30' de manière à ce que ladite identité ne soit déchiffrable uniquement que par le dispositif 12 d'homologation du serveur 10 de sécurité, possédant la clé KA', afin d'éviter toute possibilité d'accès frauduleux ou d'éventuelle manipulation, en particulier, à partir du terminal 20. L'identifiant, correspondant à la procédure d'activation en cours, est employé dans le but d'ajouter une valeur aléatoire au produit du chiffrement. De ce fait, le produit IC donne toujours un résultat différent et n'est pas reproductible par simple copie, l'identifiant variant à chaque activation d'une procédure.

Après réception du message "réponse à demande d'identité", le premier dispositif 25 de sécurité du terminal 20 transmet vers le dispositif 12 d'homologation du serveur 10 de sécurité, via les interfaces de communication 26 et 13, les interfaces 21 et 11 de transmission et un réseau 40 d'accès, un message contenant l'identifiant correspondant à la procédure d'activation en cours, le type de message "consultation identité", l'identité chiffrée IC de l'équipement E communicant 30, 30' chiffrée par la clé KD (soit KD(IC)) et un condensé COCI qui est produit par le chiffrement à partir de la clé KD des précédents composants de ce message (étape 4). Le condensé COCI permet la validation du message et l'authentification du dispositif émetteur par le dispositif destinataire.

Un condensé, chiffré par une clé utilisée par un équipement émetteur, est déchiffré par la clé complémentaire sur un équipement destinataire, qui ainsi authentifie le dispositif émetteur du message. Dans le cas présent, le premier dispositif 25 de sécurité dudit terminal 20, dispositif émetteur, chiffre le condensé COCI avec la clé KD et le dispositif 12 d'homologation du serveur 10 de sécurité, dispositif récepteur, déchiffre le condensé COCI par la clé complémentaire KD'. Ensuite, le premier dispositif 25 de sécurité chiffre le produit IC par sa clé KD. De cette manière, le dispositif 12 d'homologation est assuré que le premier dispositif 25 de sécurité a validé le démarrage de la procédure d'activation en déchiffrant le produit KD(IC).

Les échanges de messages dans le terminal 20 peuvent être réalisés, par exemple, par un protocole conforme au protocole appelé SIMAccess, tel que décrit dans la demande française de brevet FR 02 15521 déposée le 9 décembre 2002. Les échanges sur le réseau 40 d'accès et dans le serveur 10 de sécurité peuvent être réalisés, par exemple, par le protocole existant SOAP (Simple Object Access Protocol, soit protocole de communication entre objets). Pour augmenter la sécurité, les communications transmises sur le réseau 40 d'accès peuvent également être chiffrées. Tel que décrit précédemment, la procédure d'activation en cours peut être abandonnée à tout moment si un échange a échoué.

Après réception du message "consultation identité", le dispositif 12 d'homologation du serveur 10 de sécurité déchiffre le condensé COCI et le produit KD(IC) par sa clé KD' (étape 5). Ledit dispositif 12 d'homologation déduit la validité du message et le produit IC. Connaissant l'identifiant de la procédure d'activation en cours et possédant la clé KA', il déchiffre le produit IC et déduit l'identifiant IE de l'équipement E communicant 30, 30'. Une première table de correspondance contient une liste des identités IE, les clés KC et la nature des équipements E, tel qu'une borne de péage, un parcmètre, etc... Connaissant l'identité IE de l'équipement E communicant 30, 30', le dispositif 12 d'homologation déduit la clé KC de l'équipement E communicant 30, 30' et la nature de l'équipement E communicant 30, 30'. Ledit dispositif 12 d'homologation considère identifié l'équipement E communicant 30, 30' si le déchiffrement se déroule correctement et si l'identité IE de l'équipement E communicant 30, 30' et l'identifiant de la procédure d'activation en cours sont conformes aux informations contenues dans la première table de correspondance dudit dispositif 12 d'homologation.

Grâce à une deuxième table de correspondance, à partir de l'identité IE de l'équipement E communicant 30, 30', ledit dispositif 12 d'homologation déduit un ensemble de couples (clé de scellement CS_{H}, logiciel de contrôle d'intégrité AVI). L'exécution du logiciel AVI permet le contrôle d'intégrité de l'équipement E communicant 30, 30' en obtenant par le logiciel AVI des clés de scellement correspondantes à la configuration à un moment donné dudit équipement E communicant 30, 30'. Un couple est sélectionné au hasard parmi l'ensemble des couples disponibles dans ladite deuxième table de correspondance. Ensuite, le dispositif 12 d'homologation choisit au hasard au sein d'une troisième table de correspondance un couple de clés de chiffrement (KTA, KTA') parmi un ensemble de couples disponibles. Ledit dispositif 12 d'homologation chiffre la clé KTA par la clé KB (soit KB(KTA)), la clé KTA' chiffrée par la clé KC, l'ensemble chiffré par la clé KB (soit KB(KC(KTA'))) et le logiciel AVI chiffré par la clé KC (soit KC(AVI)).

De cette façon, le déchiffrement des données, traitées par le dispositif 12 d'homologation dudit serveur 10 de sécurité et exécutées par ledit équipement E communicant 30, 30', dépend du contrôle d'intégrité, réalisé par ledit dispositif 12 d'homologation, en fonction de la configuration à un moment donné dudit équipement E communicant 30, 30' pour éviter toute possibilité de prévision du résultat, du fait de la sélection au hasard parmi un ensemble de couples de clés de chiffrement.

Le dispositif 12 d'homologation du serveur 10 de sécurité transmet au premier dispositif 25 de sécurité du terminal 20 un message contenant l'identifiant de la procédure d'activation en cours, le type de message "réponse positive à consultation d'identité", la nature en clair de l'équipement E communicant 30, 30', le produit KB(KTA), le produit KB(KC(KTA')), le produit KC(AVI) et le condensé CORP qui est produit à partir du chiffrement par la clé KB des précédents composants de ce message (étape 6).

Si l'une quelconque des opérations précédentes de cette étape a échoué, ledit dispositif 12 d'homologation du serveur 10 de sécurité transmet au premier dispositif 25 de sécurité un message contenant l'identifiant de ladite procédure d'activation et le type de message "réponse négative à consultation d'identité" et le condensé CORP qui est produit à partir du chiffrement par la clé KB des précédents composants de ce message.

L'identification et l'authentification du deuxième dispositif 32 de sécurité de l'équipement E communicant 30, 30' sont réalisées lors du déchiffrement de IC et de la recherche de son identité dans la table de correspondance. Le contrôle d'intégrité est effectué par le dispositif 12 d'homologation, qui seul connaît le résultat de l'exécution sur l'équipement E communicant 30, 30' dudit logiciel AVI. Le résultat attendu est une clé de scellement CS_{H}. L'exécution du logiciel AVI est une autre clé de scellement CS_{E} qui, si le contrôle d'intégrité de l'équipement E communicant 30, 30' est positif, doit être identique à CS_{H}. Pour éviter toute possibilité de prévision du résultat de CS_{E}, le dispositif 12 d'homologation sélectionne au hasard un logiciel AVI parmi plusieurs disponibles. De cette manière, le résultat n'est pas prévisible par l'équipement E communicant 30, 30', ce qui évite toute éventuelle manipulation frauduleuse.

Le dispositif 12 d'homologation attribue un couple de clés temporaires (KTA', KTA) pour permettre le chiffrement des échanges, entre le premier dispositif 25 de sécurité du terminal 20 et le deuxième dispositif 32 de sécurité de l'équipement E communicant 30, 30', de clés de chiffrement temporaires nécessaires à la sécurité des échanges de données entre le terminal 20 et l'équipement E communicant 30, 30' lors du fonctionnement du terminal "éclaté".

La clé KTA est chiffrée par la clé KB, la clé KTA étant reconnue par le premier dispositif 25 de sécurité du terminal 20. La clé KTA' est chiffrée par la clé KC, puis par la clé KB. De cette manière, la clé KTA' n'est transmise au deuxième dispositif 32 de sécurité de l'équipement E communicant 30, 30', seulement si le premier dispositif 25 de sécurité du terminal 20 a préalablement donné son accord en déchiffrant le produit KB(KC(KTA')).

Le logiciel AVI est chiffré par la clé KC, de manière a n'être déchiffrée que par le deuxième dispositif 32 de sécurité dudit équipement E communicant 30, 30' et empêcher ainsi d'éventuelles malversations ou tentatives de fraude réalisées à partir du premier dispositif 25 de sécurité dudit terminal 20 sur le chiffrement du logiciel AVI.

Lorsque le message est de type "réponse positive à consultation d'identité", le premier dispositif 25 de sécurité dudit terminal 20 le déchiffre à partir de sa clé KB' et déduit la validité du message en déchiffrant le condensé CORP, la clé KTA et le produit KC(KTA'). Ledit premier dispositif 25 de sécurité envoie vers l'interface utilisateur 23, via les interfaces de communication 26 et 24, un message contenant l'identifiant de la procédure d'activation en cours, le type du message "identification acceptée" et la nature en clair de l'équipement E communicant 30, 30' (étape 7). Selon les ressources en place sur le terminal 20, l'utilisateur, par exemple, visualise la nature dudit équipement E communicant 30, 30' sur l'écran dudit terminal 20.

Lorsque le message est de type "réponse négative à consultation d'identité", le premier dispositif 25 de sécurité dudit terminal 20 déchiffre le condensé CORP à partir de sa clé KB' et déduit la validité du message.

Si le message est de type "réponse négative à consultation d'identité" ou si l'une quelconque des opérations précédentes de cette étape a échouée, le premier dispositif 25 de sécurité stoppe la procédure d'activation et envoie vers l'interface utilisateur 23, via les interfaces de communication 24 et 26, un message contenant l'identifiant de la procédure d'activation en cours et le type du message "identification défectueuse" (étape 7 bis). Les échanges entre les interfaces de communication 24 et 26 peuvent être réalisés, par exemple, par le protocole SIMAccess.

Après réception du message "identification défectueuse", l'interface utilisateur 23 du terminal 20 permet la restitution d'un message pour indiquer à l'utilisateur la cause de l'échec de la procédure d'activation en cours. Selon les ressources en place sur le terminal 20, la restitution peut être visuelle via un écran ou sonore ou vocale, etc... En cas d'échec, l'utilisateur dudit terminal 20 prend connaissance d'un message d'arrêt de l'établissement de la communication avec l'équipement E communicant 30, 30'.

Après réception du message "identification acceptée", l'interface utilisateur 23 permet la restitution d'un message indiquant la nature en clair de l'équipement E communicant 30, 30' et peut proposer une commande de poursuite de la procédure d'activation en cours. Le message peut être affiché, par exemple, sous la forme d'une page web si l'interface utilisateur 23 est un navigateur internet. L'utilisateur commande la poursuite ou non de la procédure d'activation pour valider l'établissement de ladite communication avec l'équipement E communicant 30, 30'. Si la réponse est positive, l'interface utilisateur 23 transmet au premier dispositif 25 de sécurité du terminal 20 un message contenant l'identifiant de la procédure d'activation en cours et le type du message "acceptation procédure". Si la réponse est négative, l'interface utilisateur 23 transmet audit premier dispositif 25 de sécurité un message contenant l'identifiant de la procédure d'activation en cours et le type du message "abandon procédure".

Lorsque le message est de type "acceptation procédure", le premier dispositif 25 de sécurité du terminal 20 choisit un couple de clés (KTB, KTB') parmi l'ensemble des couples disponibles contenu dans une table de correspondance. Il chiffre la clé KTB à partir de la clé KTA (soit KTA(KTB)) (étape 8).

Le premier dispositif 25 de sécurité du terminal 20 transmet au deuxième dispositif 32 de sécurité de l'équipement E communicant 30, 30' un message contenant l'identifiant de la procédure d'activation en cours, le type du message "demande authentification", le produit KC(KTA'), le produit KTA(KTB), le produit KC(AVI), ainsi que le condensé CODA qui est produit à partir du chiffrement par la clé KTA des précédents composants de ce message (étape 9).

Le premier dispositif 25 de sécurité du terminal 20 attribue un couple de clés temporaires (KTB', KTB) pour permettre le chiffrement des échanges dans le sens du deuxième dispositif 32 de sécurité de l'équipement E communicant 30, 30' vers le premier dispositif 25 de sécurité du terminal 20. Le premier dispositif 25 de sécurité chiffre la clé KTB par la clé KTA pour garantir que seul le deuxième dispositif 32 de sécurité de l'équipement E communicant 30, 30', apte à connaître la clé KTA', soit apte à déchiffrer le produit KTA(KTB) et ainsi à extraire la clé KTB.

Lorsque le message est de type "abandon procédure" ou si l'une quelconque des opérations précédentes de cette étape a échouée, le premier dispositif 25 de sécurité du terminal 20 stoppe la procédure d'activation en cours et envoie à l'interface utilisateur 23 un message contenant l'identifiant de la procédure d'activation en cours et le type du message "abandon procédure" (étape 9 bis).

Après réception du message "abandon procédure", l'interface utilisateur 23 du terminal 20 permet la restitution d'un message pour indiquer à l'utilisateur la cause de l'échec de la procédure d'activation en cours. Selon les ressources en place sur le terminal 20, la restitution peut être visuelle via un écran ou sonore ou vocale, etc... En cas d'échec, l'utilisateur dudit terminal 20 prend connaissance d'un message d'arrêt de l'établissement de la communication avec l'équipement E communicant 30, 30'.

Après réception du message "demande authentification", le deuxième dispositif 32 de sécurité de l'équipement E communicant 30, 30' déchiffre d'une part à partir de sa clé KC' et déduit le logiciel AVI et la clé de chiffrement KTA' et, d'autre part, à partir de la clé KTA' déduit la clé KTB et la validité du message en déchiffrant le condensé CODA.

Ledit deuxième dispositif 32 de sécurité exécute le logiciel AVI. Le logiciel AVI est dit "signé", car il est conçu pour ne pouvoir s'exécuter que sur un équipement E communicant 30, 30' du type précédemment identifié par le dispositif 12 d'homologation. Il est également conçu pour produire une valeur appelée "clé de scellement CS_{E}", appelé aussi clé de hachage ou hachage, à partir d'un ensemble de données acquises au cours de l'exécution du logiciel AVI dans l'équipement E communicant 30, 30'. En acquérant les données dans ledit équipement E communicant 30, 30', le logiciel AVI ne peut être exécuté que par ledit équipement E communicant 30, 30' qui est ainsi authentifié. Les informations acquises peuvent être, par exemple, un nom d'un fichier, la date et l'heure de l'horloge interne de l'équipement E communicant 30, 30', l'espace mémoire utilisé, etc... ou la combinaison de ces informations.

A l'issue de l'exécution du logiciel AVI, ledit deuxième dispositif 32 de sécurité de l'équipement E communicant 30, 30' choisit un couple de clés (KTC, KTC') au hasard parmi l'ensemble des couples disponibles contenu dans une table de correspondance. Ledit deuxième dispositif 32 de sécurité chiffre la clé de scellement CS_{E} chiffrée par la clé KA et l'ensemble chiffré par la clé KTB, soit (KTB(KA(CS_{E}))). Il chiffre également la clé KTC à partir de la clé KTB (soit KTB(KTC)). Le deuxième dispositif 32 de sécurité de l'équipement E communicant 30, 30' envoie au premier dispositif 25 de sécurité du terminal 20 un message contenant l'identifiant de la procédure d'activation en cours, le type du message "réponse authentification", le produit KTB(KA(CS_{E})), le produit KTB(KTC) et le condensé CORA qui est produit à partir du chiffrement par la clé KTB des précédents composants de ce message (étape 10).

Le deuxième dispositif 32 de sécurité de l'équipement E communicant 30, 30' attribue un couple de clés temporaires (KTC', KTC) pour permettre le chiffrement des échanges dans le sens du premier dispositif 25 de sécurité du terminal 20 vers le deuxième dispositif 32 de sécurité de l'équipement E communicant 30, 30'. Le deuxième dispositif 32 de sécurité chiffre la clé KTC par la clé KTB en vue de transférer de manière sécurisée la clé KTC vers le premier dispositif 25 de sécurité du terminal 20. La clé de scellement CS_{E} est chiffrée par la clé KA, puis par la clé KTB, la clé KTB garantissant que le premier dispositif 25 de sécurité du terminal 20 a validé le produit KTB(KA(CS_{E})) en le déchiffrant et la clé KA garantissant que la clé CS_{E} est envoyé par le deuxième dispositif 32 de sécurité de l'équipement E communicant 30, 30' et est déchiffrable uniquement par le dispositif 12 d'homologation, sans possibilité de malversations ou de fraudes à partir du premier dispositif 25 de sécurité du terminal 20.

Après l'envoi du message "réponse authentification", ledit deuxième dispositif 32 de sécurité transmet vers le deuxième dispositif 34 de gestion, via les interfaces de communication 33 et 35, une demande d'activation du terminal "éclaté", sous la forme d'un message contenant l'identifiant de la procédure d'activation en cours, le type de message "activation terminal éclaté avec équipement E", ainsi que les clés KTB et KTC' (étape 11).

Les échanges entre les interfaces de communication 33 et 35 peuvent être réalisés, par exemple, par le protocole SIMAccess.

Si l'une quelconque des opérations précédentes de cette étape a échouée, le deuxième dispositif 32 de sécurité de l'équipement E communicant 30, 30' envoie au premier dispositif 25 de sécurité du terminal 20 un message contenant l'identifiant de la procédure d'activation en cours, le type du message "anomalie authentification" et le condensé CORA qui est produit à partir du chiffrement par la clé KTB des précédents composants de ce message. La procédure d'activation en cours est abandonnée.

Lorsque le message est de type "réponse authentification", le premier dispositif 25 de sécurité du terminal 20 déchiffre à partir de sa clé KTB' et déduit le produit KA(CS_{E}), la clé KTC et la validité du message en déchiffrant le condensé CORA. Ledit premier dispositif 25 de sécurité chiffre le produit KA(CS_{E}) chiffré par la clé KD (soit KD(KA(CS_{E}))) pour validation d'une transmission correcte par le premier dispositif 25 de sécurité du terminal 20. Il transmet au dispositif 12 d'homologation du serveur 10 de sécurité un message contenant l'identifiant de la procédure d'activation en cours, le type de message "validation authentification", le produit KD(KA(CS_{E})) et le condensé CORC qui est produit par le chiffrement par KD des précédents composants de ce message (étape 12). Le premier dispositif 25 de sécurité du terminal 20 chiffre le produit KA(CS_{E}) par la clé KD de manière à valider la transmission correcte à partir dudit premier dispositif 25 de sécurité.

Lorsque le message est de type "anomalie authentification", ledit premier dispositif 25 de sécurité déchiffre à partir de sa clé KTB' et déduit la validité du message en déchiffrant le condensé CORA. Si le message est de type "anomalie authentification" ou si l'une quelconque des opérations précédentes de cette étape a échouée, ledit premier dispositif 25 de sécurité stoppe la procédure d'activation en cours et envoie à l'interface utilisateur 23 un message contenant l'identifiant de la procédure d'activation en cours et le type du message "authentification défectueuse" (étape 12 bis).

Après réception du message "authentification défectueuse", l'interface utilisateur 23 du terminal 20 peut transmettre un message pour indiquer à l'utilisateur la cause de l'échec de la procédure d'activation. Selon les ressources en place sur le terminal 20, la restitution peut être visuelle via un écran ou sonore ou vocale, etc... En cas d'échec, l'utilisateur dudit terminal 20 prend connaissance d'un message d'arrêt de l'établissement de la communication avec l'équipement E communicant 30, 30'.

Après réception du message "validation authentification", le dispositif 12 d'homologation du serveur 10 de sécurité déchiffre à partir de sa clé KD' et déduit la validité du message en déchiffrant le condensé CORC et le produit KA(CS_{E}). Puis, ledit dispositif 12 d'homologation déchiffre à partir de sa clé KA' et déduit la clé de scellement CS_{E}. Ledit dispositif 12 d'homologation compare la clé de scellement CS_{E} avec la clé de scellement CS_{H} obtenue précédemment par la table de correspondance (identifiant d'équipement E, (clé de scellement CS_{H}, logiciel AVI)).

Si les 2 clés de scellement CS_{H} et CS_{E} sont identiques, l'équipement E communicant 30, 30' est considéré comme authentifié, l'équipement E communicant 30, 30' possédant avec certitude la clé KC', est intègre car les 2 clés de scellement correspondent. Par conséquent, le résultat du déchiffrement des données traitées par ledit serveur 10 de sécurité et exécutées uniquement par ledit équipement E communicant 30, 30' est identique au résultat du chiffrement de l'identité dudit équipement E communicant 30, 30' dans ledit serveur 10 de sécurité. Les données traitées par ledit serveur 10 de sécurité ont été exécutées uniquement par l'équipement E communicant 30, 30' correspondant audit terminal "éclaté".

Dans le cas contraire, ledit équipement E communicant 30, 30' est considéré comme corrompu, soit non authentifié, soit faisant l'objet de fraude ou de malversation donc non intègre. Le dispositif 12 d'homologation du serveur 10 de sécurité envoie au premier dispositif 25 de sécurité du terminal 20 un message contenant l'identifiant de la procédure d'activation en cours, le type de message et un condensé COVC qui est produit par le chiffrement par KB des précédents composants de ce message (étape 13). Le type de message est soit "vérification positive du contrôle d'intégrité", soit "vérification négative du contrôle d'intégrité" si l'une quelconque des opérations précédentes de cette étape a échouée.

Après réception du message, le premier dispositif 25 de sécurité du terminal 20 déchiffre à partir de sa clé KB' et déduit la validité du message en déchiffrant le condensé COVC. Si le message est de type "vérification positive du contrôle d'intégrité", ledit premier dispositif 25 de sécurité envoie, via les interfaces de communication 26 et 28, vers le premier dispositif 27 de gestion une demande d'activation du terminal "éclaté", sous la forme d'un message contenant l'identifiant de la procédure d'activation en cours et le type de message "activation terminal éclaté", ainsi que les clés KTC et KTB' (étape 14). Les échanges entre les interfaces de communication 26 et 28 du terminal 20 peuvent être réalisés, par exemple, par le protocole SIMAccess.

Si le message est de type "vérification négative du contrôle d'intégrité" ou si l'une quelconque des opérations précédentes de cette étape a échouée, le premier dispositif 25 de sécurité du terminal 20 stoppe la procédure d'activation et envoie à l'interface utilisateur 23 un message contenant l'identifiant de la procédure d'activation en cours, un type de message "équipement corrompu" et l'identité de l'équipement E communicant 30, 30' (étape 14 bis).

Après réception du message "équipement corrompu", l'interface utilisateur 23 du terminal 20 peut transmettre un message pour indiquer à l'utilisateur la cause de l'échec de la procédure d'activation en cours. Selon les ressources en place sur le terminal 20, la restitution peut être visuelle via un écran ou sonore ou vocale, etc... En cas d'échec, l'utilisateur dudit terminal 20 prend connaissance d'un message d'arrêt de l'établissement de la communication avec l'équipement E communicant 30, 30'.

Après réception du message "activation terminal éclaté", la procédure d'activation d'un terminal "éclaté" a été exécutée avec succès (étape 15). Le premier dispositif 27 de gestion du terminal 20 est apte à communiquer de manière sécurisée avec l'équipement E communicant 30, 30', les clés KTC et KTB' étant employées pour sécuriser respectivement les communications descendantes et montantes entre ledit premier dispositif 27 de gestion du terminal 20 et le deuxième dispositif 32 de sécurité de l'équipement E communicant 30, 30'.

Cette étape réalisée, le terminal "éclaté" composé du terminal 20 et de l'équipement E communicant 30, 30' est opérationnel. Ledit terminal éclaté est alors considéré comme activé.

Le premier dispositif 27 de gestion du terminal 20 et le deuxième dispositif 34 de gestion de l'équipement E communicant 30, 30' sont alors aptes à communiquer entre eux selon un mode sécurisé par le chiffrement, grâce aux clés KTB, KTB', KTC, et KTC'. En fonction de la nature et de l'utilisation du terminal "éclaté" ainsi formé, les échanges peuvent être initialisés soit par le premier dispositif 27 de gestion du terminal 20, soit par le deuxième dispositif 34 de gestion de l'équipement E communicant 30, 30'.

Lorsque les échanges sont initialisés par le premier dispositif 27 de gestion du terminal 20, les messages sont transmis vers le deuxième dispositif 34 de gestion de l'équipement E communicant 30, 30', par l'intermédiaire de l'interface 28 de communication, la troisième interface 22 de transmission, le réseau 50 de connexion, la quatrième interface 31 de transmission et l'interface 35 de communication. Lorsque les échanges sont initialisés par le deuxième dispositif 34 de gestion de l'équipement E communicant 30, 30', les messages sont transmis vers le premier dispositif 27 de gestion du terminal 20, en sens inverse et par l'intermédiaire des même interfaces.

Les échanges entre l'interface 26 de communication et la troisième interface 22 de transmission, ainsi que ceux entre la troisième et la quatrième interface de transmission 22 et 31 sur le réseau 50 de connexion et ceux entre la quatrième interface 31 de transmission et l'interface 35 de communication, peuvent être réalisés, par exemple, par le protocole SOAP.

La mise en route d'une nouvelle procédure d'activation pour un terminal éclaté peut avoir lieu à n'importe quel moment au cours d'une activation déjà existante. La nouvelle procédure d'activation, totale ou partielle, permet de garantir dans le temps l'identité, l'authenticité et l'intégrité des équipements mis en jeu dans ledit terminal "éclaté". Si la nouvelle procédure d'activation échoue, ledit terminal "éclaté" est désactivé et les communications en cours sont brutalement arrêtées.

En fonction du niveau de sécurité requis ou souhaité, la mise en oeuvre de la procédure d'activation, telle que décrite précédemment, peut être simplifiée, par exemple, en supprimant le deuxième dispositif 32 de sécurité de l'équipement E communicant 30, 30'.

La simplification peut également être réalisée de telle sorte que ledit dispositif 12 d'homologation prévu dans le serveur 10 de sécurité, pour les fonctions d'identification, d'authentification et de contrôle d'intégrité dudit équipement E communicant 30, 30', puisse être intégré dans le terminal 20 ou dans le premier dispositif 25 de sécurité.

De la même manière, les fonctions du dispositif 12 d'homologation du serveur 10 de sécurité et les fonctions du terminal 20 peuvent être intégrées dans le dispositif 25 de sécurité dudit terminal 20. C'est le cas, par exemple, lorsque le terminal 20 est une carte d'identité électronique, intégrant toutes les fonctions, et que le terminal "éclaté" est constitué de ladite carte d'identité (soit le terminal 20) et d'une borne communicante (soit l'équipement E communicant 30, 30').

Néanmoins, pour être efficace, une procédure d'activation d'un terminal "éclaté" doit impérativement comporter au moins un contrôle réalisé par ledit premier dispositif 25 de sécurité du terminal 20 de manière à sécuriser convenablement la communication entre ledit terminal 20 et l'équipement E communicant 30, 30', composant ledit terminal "éclaté".

La mise en oeuvre de la procédure d'activation peut également être complexifiée en divisant chaque dispositif de sécurité en trois dispositifs distincts chacun dédié à une fonction spécifique : identification, authentification et contrôle d'intégrité. Dans ce cas, l'identification, l'authentification et le contrôle d'intégrité dudit équipement E communicant 30, 30' sont réalisés par des dispositifs différents et distincts. Les étapes de ladite procédure d'activation sont inchangées, mais de nouveaux messages entre ces nouveaux dispositifs sont créés pour permettre les échanges de données entres lesdits nouveaux dispositifs.

## Revendications

1. Procédé de communication sécurisée de données entre un terminal (20) et au moins un équipement communicant (30, 30'), **caractérisé en ce que** ledit procédé comporte les étapes consistant à :
- identifier ledit équipement communicant (30, 30') en communication avec ledit terminal (20) par au moins un premier dispositif (25) de sécurité, installé dans ledit terminal (20), pour reconnaître la nature dudit équipement communicant (30, 30'),
- authentifier ledit équipement communicant (30, 30') en acquérant des données traitées par au moins un serveur (10) de sécurité pour être exécutables uniquement par ledit équipement communicant (30, 30'),
- contrôler l'intégrité dudit équipement communicant (30, 30') par au moins un dispositif (12) d'homologation dudit serveur (10) de sécurité grâce auxdites données transmises lors de l'authentification,
- dans le cas d'identification, d'authentification et de contrôle d'intégrité positifs, commander au moins un premier dispositif (27) de gestion installé dans ledit terminal (20) pour établir une communication sécurisée de données avec ledit équipement communicant (30, 30').

2. Procédé de communication sécurisée de données selon la revendication 1, **caractérisé en ce que** ledit procédé inclut une étape d'établissement d'une liaison par l'intermédiaire d'au moins un réseau (50) de connexion entre ledit terminal (20) et ledit équipement communicant (30, 30').

3. Procédé de communication sécurisée de données selon l'une des revendications 1 ou 2, **caractérisé en ce que** ladite liaison établie par l'intermédiaire dudit réseau (50) de connexion permet des communications appartenant au groupe constitué des communications filaire, mobile, optique et radiocommunication de proximité.

4. Procédé de communication sécurisée de données selon l'une quelconque des revendications 1 à 3, **caractérisé en ce que** les échanges de données entre ledit terminal et ledit équipement communicant sont gérés et contrôlés par l'intermédiaire d'au moins un premier (25) et d'au moins un deuxième (32) dispositifs de sécurité, respectivement installés dans ledit terminal et ledit équipement communicant.

5. Procédé de communication sécurisée de données selon l'une quelconque des revendications 1 à 4, **caractérisé en ce qu'**au moins une procédure d'activation d'une communication sécurisée est identifiée et traitée par ledit premier dispositif (25) de sécurité entre ledit terminal (20) et ledit équipement communicant (30, 30').

6. Procédé de communication sécurisée de données selon l'une quelconque des revendications 1 à 5, **caractérisé en ce qu'**au moins un paramétrage de ladite communication sécurisée est contrôlé par ledit premier dispositif (25) de sécurité dudit terminal (20) automatiquement, sans intervention d'un utilisateur dudit terminal (20).

7. Procédé de communication sécurisée de données selon l'une quelconque des revendications 1 à 6, **caractérisé en ce que** les échanges de données entre ledit terminal (20) et ledit équipement communicant (30, 30') sont sécurisés par l'utilisation d'au moins une clé de chiffrement pour traiter les données avant la transmission.

8. Procédé de communication sécurisée de données selon l'une quelconque des revendications 1 à 7, **caractérisé en ce que** les échanges de données entre ledit terminal (20) et ledit serveur (10) de sécurité sont sécurisés par l'utilisation d'au moins une clé de chiffrement pour traiter les données avant la transmission.

9. Procédé de communication sécurisée de données selon l'une quelconque des revendications 1 à 8, **caractérisé en ce que** le résultat du déchiffrement des données traitées par ledit serveur (10) de sécurité et exécutées par ledit équipement communicant (30, 30') est identique au résultat du chiffrement de l'identité dudit équipement (30, 30') dans ledit serveur (10) de sécurité.

10. Procédé de communication sécurisée de données selon l'une quelconque des revendications 1 à 9, **caractérisé en ce que** le déchiffrement desdites données, traitées par ledit serveur (10) de sécurité et exécutées par ledit équipement communicant (30, 30'), dépend du contrôle d'intégrité, réalisé par ledit dispositif (12) d'homologation installé dans ledit serveur (10) de sécurité, en fonction de la configuration à un moment donné dudit équipement communicant (30, 30') pour éviter toute possibilité de prévision du résultat.

11. Procédé de communication sécurisée de données selon l'une quelconque des revendications 1 à 10, **caractérisé en ce que** les transmissions entre ledit premier dispositif (25) de sécurité du terminal (20) et ledit deuxième dispositif (32) de sécurité de l'équipement communicant (30, 30') sont chiffrées.

12. Procédé de communication sécurisée de données selon l'une quelconque des revendications 1 à 11, **caractérisé en ce que** les transmissions entre ledit premier dispositif (25) de sécurité du terminal (20) et ledit dispositif (12) d'homologation du serveur (10) de sécurité sont chiffrées.

13. Procédé de communication sécurisée de données selon l'une quelconque des revendications 1 à 12, **caractérisé en ce que** ledit terminal (20) reçoit la nature d'au moins un équipement communicant (30, 30') par au moins une interface utilisateur (23) et valide l'établissement de la communication avec ledit équipement communicant (30, 30').

14. Procédé de communication sécurisée de données selon l'une quelconque des revendications 1 à 13, **caractérisé en ce que** ledit terminal (20) reçoit un message d'arrêt de l'établissement de ladite communication par ladite interface utilisateur (23), en cas d'échec d'identification ou d'authentification ou de contrôle d'intégrité.

15. Procédé de communication sécurisée de données selon l'une quelconque des revendications 1 à 14, **caractérisé en ce que** plusieurs équipements communicants (30, 30') établissent simultanément une communication avec ledit terminal (20) par l'intermédiaire d'au moins un réseau (50) de connexion.

16. Procédé de communication sécurisée de données selon l'une quelconque des revendications 1 à 15, **caractérisé en ce que** plusieurs équipements communicants (30, 30') communiquent indépendamment avec ledit terminal (20) par l'intermédiaire dudit réseau (50) de connexion.

17. Procédé de communication sécurisée de données selon l'une quelconque des revendications 1 à 16, **caractérisé en ce qu'**une procédure d'activation de la communication sécurisée est identifiée pour chaque équipement communicant (30, 30') en communication avec ledit terminal (20).

18. Système de communication sécurisée de données entre un terminal (20) et au moins un équipement communicant (30, 30'), **caractérisé en ce que**, au moins une communication étant établie entre ledit terminal (20) et ledit équipement communicant (30, 30'), ledit système comprend au moins un serveur (10) de sécurité apte à échanger des données, pour sécuriser ladite communication établie, avec au moins un premier dispositif (25) de sécurité, installé dans ledit terminal (20), équipé d'au moins un premier dispositif (27) de gestion pour gérer ledit équipement communicant (30, 30').

19. Serveur (10) de sécurité associable au système de communication sécurisée de données selon la revendication 18, **caractérisé en ce qu'**il comprend au moins un dispositif (12) d'homologation apte à valider l'identification, l'authentification et le contrôle d'intégrité d'au moins un équipement communicant (30, 30') et au moins des moyens d'émission et de réception (11, 13) de données pour les échanges avec ledit terminal (20).

20. Serveur (10) de sécurité selon la revendication 19, **caractérisé en ce que** ledit dispositif (12) d'homologation est intégré audit terminal (20).

21. Serveur (10) de sécurité selon l'une des revendications 19 ou 20, **caractérisé en ce que** l'identification, l'authentification et le contrôle d'intégrité dudit équipement communicant (30, 30') sont réalisés par des dispositifs différents et distincts.

22. Terminal (20) associable au système de communication sécurisée de données selon l'une des revendications 18 à 21, **caractérisé en ce qu'**il comprend au moins un premier dispositif (25) de sécurité recevant l'identité dudit équipement communicant (30, 30') et dialoguant avec ledit serveur (10) de sécurité, au moins une interface utilisateur (23) accédant aux ressources du terminal (20) pour informer un utilisateur dudit terminal (20), au moins un premier dispositif (27) de gestion pour gérer ledit terminal (20) et au moins des moyens d'émission et de réception de données.

23. Equipement communicant (30, 30'), incluant au moins des moyens d'émission et de réception (31, 33) de données pour communiquer avec un terminal (20), associable au système de communication sécurisée de données selon l'une des revendications 18 à 22, **caractérisé en ce que** ledit équipement communicant (30) comprend au moins un deuxième dispositif (32) de sécurité pour réaliser l'identification, l'authentification et le contrôle d'intégrité dudit équipement communicant (30, 30') et au moins un deuxième dispositif (34) de gestion pour gérer ledit terminal (20).

24. Equipement communicant (30, 30') selon la revendication 22, **caractérisé en ce que** lesdits deuxième dispositif (32) de sécurité et deuxième dispositif (34) de gestion dudit équipement communicant (30, 30') interdisent toute intervention sur ledit équipement communicant (30, 30') par ledit utilisateur dudit terminal mobile (20).
